# EUROPÄISCHE PATENTSCHRIFT

(11) **EP 1 554 490 B1**
(45) Veröffentlichungstag und Bekanntmachung des Hinweises auf die Patenterteilung: **22.12.2010**
(21) Anmeldenummer: 03757691.5
(22) Anmeldetag: 08.10.2003
(51) Int. Cl.: F02M 63/02, F02M 59/46, F02M 69/46, F02M 53/02, F16K 17/196

(54) **VENTIL ZUM STEUERN VON FLÜSSIGKEIT**
VALVE FOR THE CONTROL OF FLUIDS
CLAPET DE REGULATION DE FLUIDE

(30) Priorität: 17.10.2002 DE 10248430; 26.08.2003 DE 10339250
(43) Veröffentlichungstag der Anmeldung: 20.07.2005
(73) Patentinhaber: ROBERT BOSCH GMBH, 70442 Stuttgart (DE)
(72) Erfinder: KNIS, Wolfram, 73525 Schwaebisch Gmuend (DE); LORENZ, Christian, 73434 Aalen-Unterrombach (DE); KRIMMER, Erwin, 73655 Pluedershausen (DE); MIEHLE, Tilman, 71334 Waiblingen (DE); REIF, Martin, 79618 Rheinfelden (DE); FUNKE, Phillip, 73728 Esslingen (DE)
(86) Internationale Anmeldenummer: PCT/DE2003/003331
(87) Internationale Veröffentlichungsnummer: WO 2004/040127

(56) Entgegenhaltungen:
- DE-A- 19 611 434
- DE-A- 19 741 532
- DE-A- 19 829 553
- DE-C- 665 886
- US-A- 4 561 559
- US-A- 4 569 803
- US-A- 5 282 492
- US-A1- 2001 025 629
- US-A1- 2003 150 426
- US-B1- 6 283 094

## Beschreibung

### Stand der Technik

Die Erfindung geht aus von einem Ventil zum Steuern von Flüssigkeit nach der Gattung des Hauptanspruchs.

In der nicht vorveröffentlichten deutschen Patentanmeldung DE 101 39 871 ist ein Ventil zum Steuern von Flüssigkeit, ein sogenanntes Druckhalteventil, vorgeschlagen worden, das in einem Injektor integriert ist. Nachteilig ist, daß es vergleichsweise teuer und aufwendig ist, für jeden Injektor ein Druckhalteventil vorzusehen.

In der nicht vorveröffentlichten deutschen Patentanmeldung DE 102 18 024 ist eine Kraftstoffeinspritzvorrichtung vorgeschlagen worden, bei der über ein elektronisch gesteuertes Druckregelventil ein Niederdruckspeicher mit Kraftstoff aus einem Hochdruckspeicher befüllt wird. Auf diese Weise kann auf eine zusätzliche Förderpumpe für die Befüllung des Niederdruckspeichers verzichtet werden. Über ein Druckhalteventil wird überschüssiger Kraftstoff aus dem Niederdruckspeicher in einen Kraftstofftank zurückgeführt. Nachteilig ist jedoch, daß insgesamt zwei Ventile notwendig sind, um den Niederdruckspeicher zu befüllen und den vorbestimmten Druck in dem Niederdruckspeicher

aufrechtzuerhalten. Dies ist vergleichsweise teuer und auch hinsichtlich der Montage sehr aufwendig. US 2001/025629 beschreibt ein Ventil nach dem Oberbegriff des Anspruchs 1.

### Vorteile der Erfindung

Das erfindungsgemäße Ventil zum Steuern von Flüssigkeiten mit den Merkmalen des Anspruchs 1 hat demgegenüber den Vorteil, dass auf einfache Art und Weise eine Verbesserung gegenüber bekannten Ventilen erzielt wird, indem zwei parallel geschaltete Ventile in einem Ventil zusammengefaßt sind, wobei das erste ein Überdruckventil ist und zum Beispiel in Richtung einer Leckölleitung öffnet und wobei das zweite ein in entgegengesetzter Richtung, zum Beispiel in Richtung eines Niederdruckspeichers, öffnendes Rückschlagventil ist.

Das Ventil weist einen ersten Schließkörper mit einem ersten Ventilsitz und einen zweiten Schließkörper mit einem zweiten Ventilsitz auf, wobei der zweite Ventilsitz an dem ersten Schließkörper angeordnet ist. Durch die zwei mit jeweils einer Ventilfeder zusammenwirkenden Schließkörper ist es möglich, daß das erfindungsgemäße Druckhalteventil bei zwei unterschiedlichen Drücken, bei einem Öffnungsdruck und einem Haltedruck, in entgegengesetzten Richtungen öffnet. Das Ventil, das im Folgenden auch als Druckhalteventil bezeichnet wird, öffnet zum einen, wenn der Druck in einer zum Beispiel mit dem Niederdruckspeicher verbundenen Leitung unter den Öffnungsdruck absinkt, und läßt Kraftstoff aus einer weiteren Leitung, zum Beispiel der Leckölleitung, in den Niederdruckspeicher strömen. Auf diese Weise kann der Niederdruckspeicher wieder befüllt werden, nachdem beispielsweise nach einer Reparatur an der Kraftstoffeinspritzvorrichtung oder einem Kraftstoffmangel in einem Kraftstofftank (Tankleerfahrt) der Druck in dem Niederdruckspeicher abgefallen ist. Zum anderen öffnet das Druckhalteventil, wenn der Druck in dem Niederdruckspeicher den Haltedruck übersteigt und läßt überschüssigen Kraftstoff aus dem Niederdruckspeicher in die Leckölleitung abfließen. Das erfindungsgemäße Druckhalteventil wird somit im geöffneten Zustand abhängig vom Druck in dem Niederdruckspeicher entweder in die eine oder die andere Richtung durchströmt und weist zwei Durchflußrichtungen auf.

Auf diese Weise ist es möglich, mit einem einzigen zentralen bzw. gemeinsamen für alle Injektoren vorgesehenen Druckhalteventil den Niederdruckspeicher über eine Leckölleitung zu befüllen und den Druck in dem Niederdruckspeicher konstant auf einem vorbestimmten Wert zu halten.
Durch die Integration von zwei Ventilen in einem werden die Herstellungs- und Montagekosten gesenkt und wird eine äußerst kompakte und raumsparende Bauweise erzielt.

Durch die in den Unteransprüchen aufgeführten Maßnahmen sind vorteilhafte Weiterbildungen und Verbesserungen der im Hauptanspruch angegebenen Kraftstoffeinspritzvorrichtung möglich.

Vorteilhaft ist es, wenn der erste Schließkörper den Innenraum des Gehäuses in einen Hochdruckraum und einen Niederdruckraum teilt, da durch das Volumen des Hochdruckraums Druckschwankungen in dem Niederdruckspeicher kompensiert werden können, so daß der Einspritzvorgang in den Injektoren nicht negativ beeinflußt wird.

Desweiteren vorteilhaft ist, den ersten Schließkörper und den zweiten Schließkörper zusammen auf einer Achse anzuordnen, da auf diese Weise eine äußerst kompakte Bauweise erzielt wird.

Auch vorteilhaft ist, wenn der erste Schließkörper und der zweite Schließkörper in einer zueinander entgegengesetzten Öffnungsrichtung öffnen, da auch auf diese Weise eine äußerst kompakte Bauweise erzielt wird.

Darüber hinaus vorteilhaft ist, daß der erste Schließkörper einen Schließdeckel mit einem von dem Schließdeckel abstehenden zylindrischen Rohrabschnitt aufweist, da der zweite Schließkörper auf diese Weise in dem zylindrischen Rohrabschnitt des ersten Schließkörpers raumsparend angeordnet werden kann.

Vorteilhaft ist, als zweiten Schließkörper eine Kugel vorzusehen, da mit dieser eine einfache Abdichtung am zweiten Ventilsitz möglich ist und die Kugel kompakt und platzsparend angeordnet werden kann.

Zusätzlich vorteilhaft ist, wenn das Gehäuse des Druckhalteventils aus einem deckelförmigen und einem topfförmigen Teil besteht, da dies fertigungstechnisch besonders günstig ist.

Desweiteren vorteilhaft ist, in einem Niederdruckraum des Ventils an einen ersten Anschluß anschließend einen ersten Filter und in einem Hochdruckraum an einen zweiten Anschluß anschließend einen zweiten Filter anzuordnen, da ansonsten in dem Kraftstoff vorhandene Schmutzpartikel in das Ventil gelangen und dessen Funktion beeinträchtigen könnten. Außerdem wird verhindert, daß ungefilterter Kraftstoff von der Leckölleitung in den Niederdruckspeicher gelangen kann.

Auch vorteilhaft ist, wenn die Leckölleitung mit einer Druckseite der Förderpumpe verbunden ist, da auf diese Weise der Hochdruckpumpe Kraftstoff zugeführt wird, der nicht von der Förderpumpe gefördert ist. Die Förderpumpe muß daher weniger Kraftstoff fördern, kann daher kleiner ausgelegt werden und ist damit preisgünstiger.

### Zeichnung

Ausführungsbeispiele der Erfindung sind in der Zeichnung vereinfacht dargestellt und in der nachfolgenden Beschreibung näher erläutert.

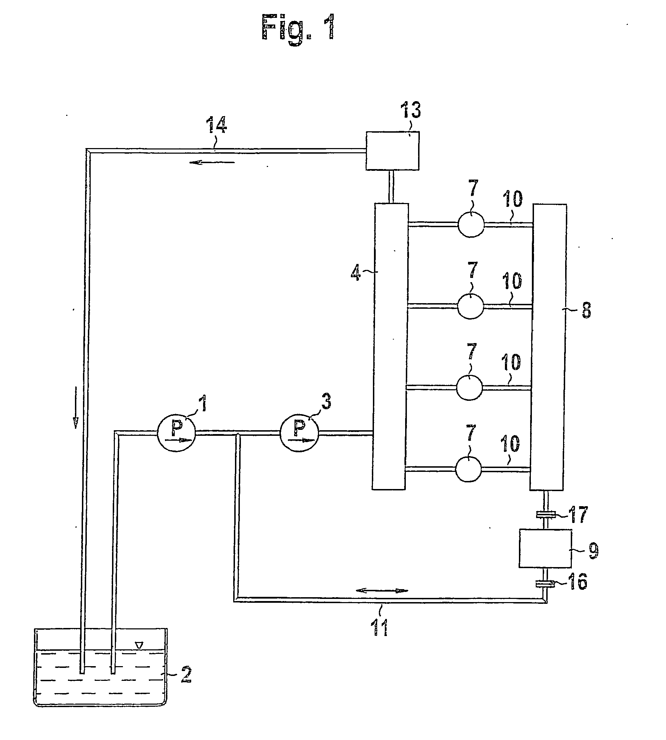

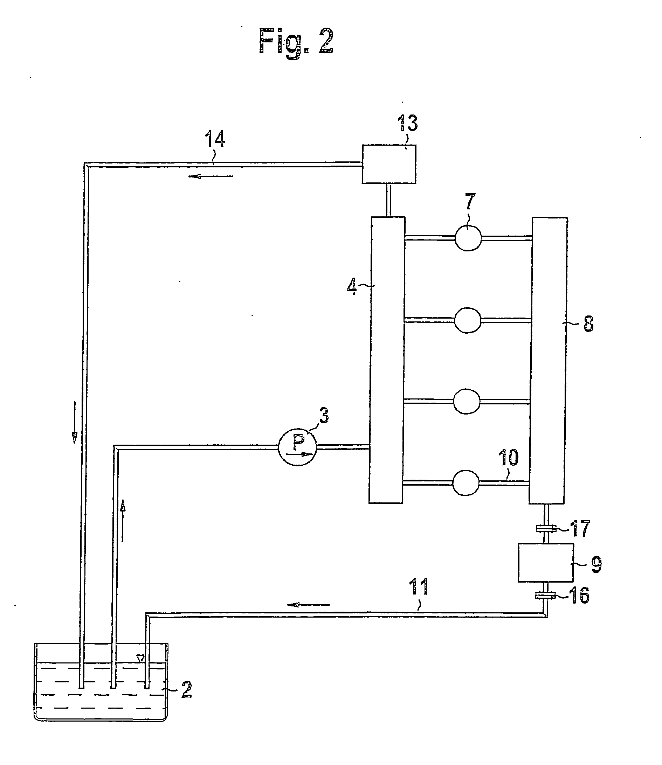

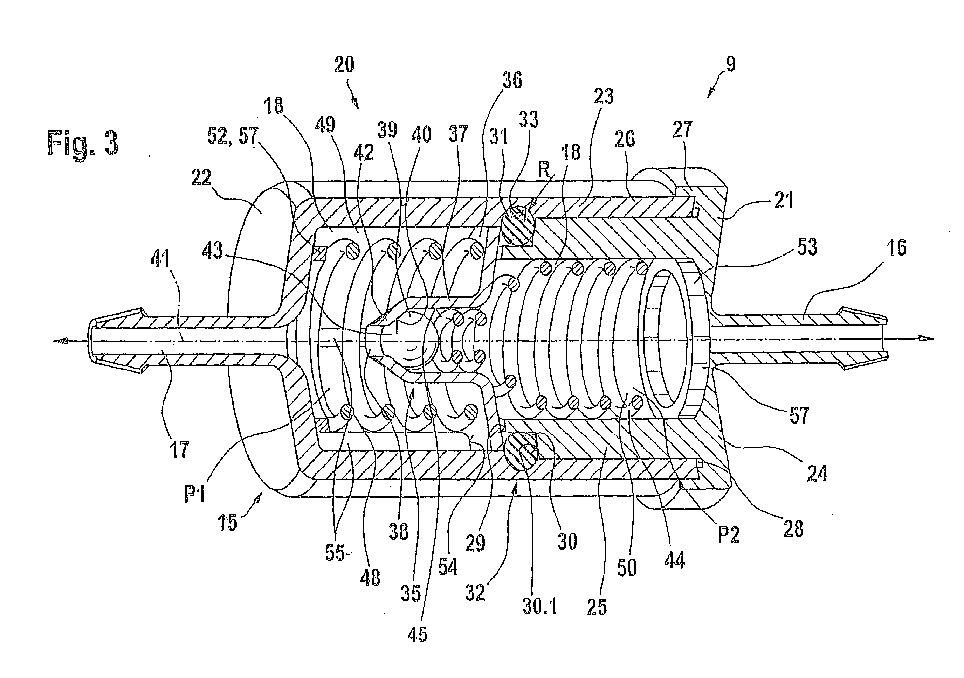

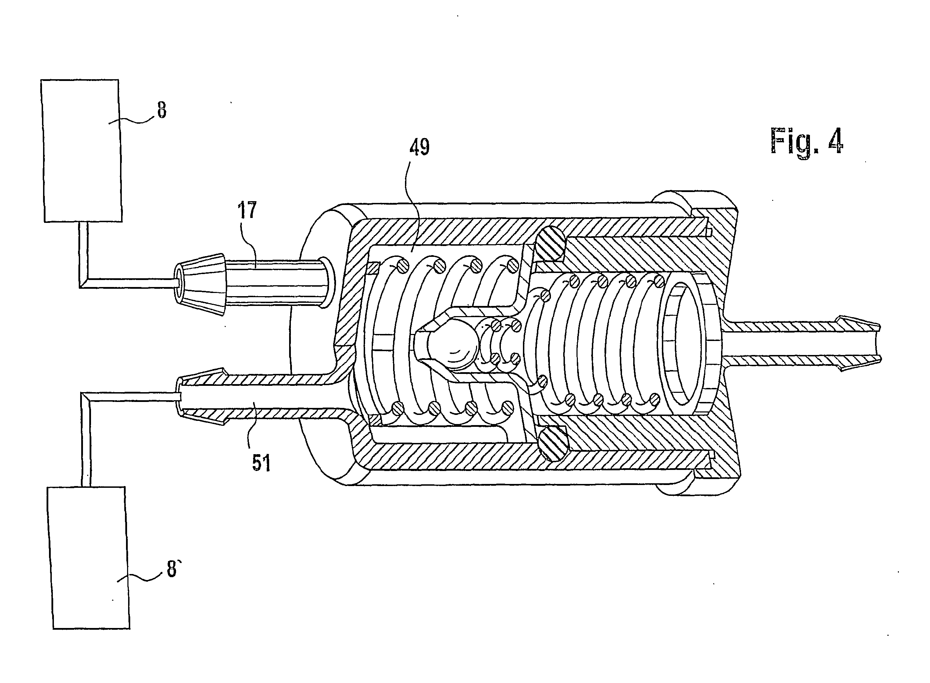

Fig.1 zeigt eine erste Kraftstoffeinspritzvorrichtung einer Brennkraftmaschine in vereinfachter schematischer Darstellung mit einem erfindungsgemäßen Ventil, Fig.2 zeigt vereinfacht eine zweite Kraftstoffeinspritzvorrichtung in vereinfachter schematischer Darstellung mit einem erfindungsgemäßen Ventil, Fig.3 zeigt vereinfacht ein erfindungsgemäßes Ventil mit einem Ausgangskanal, Fig.4 ein weiteres erfindungsgemäßes Ventil mit zwei Ausgangskanälen,

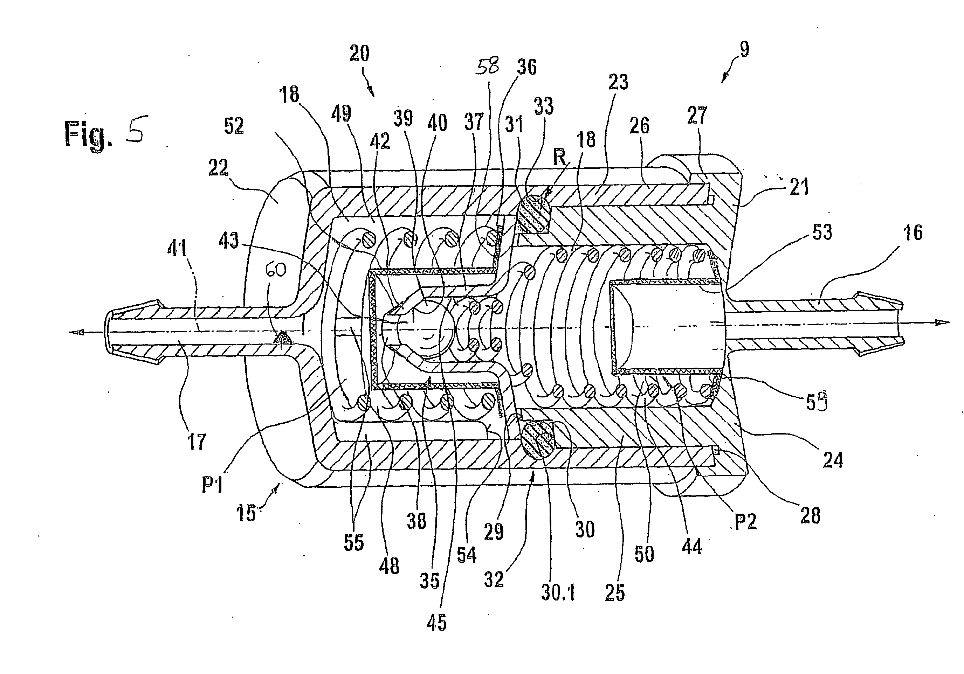

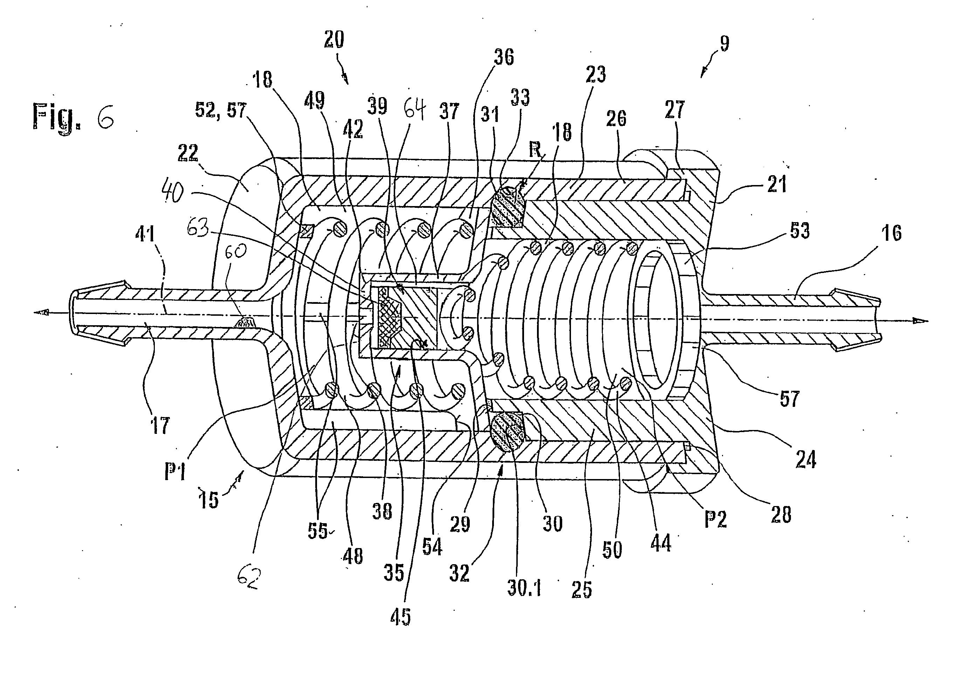

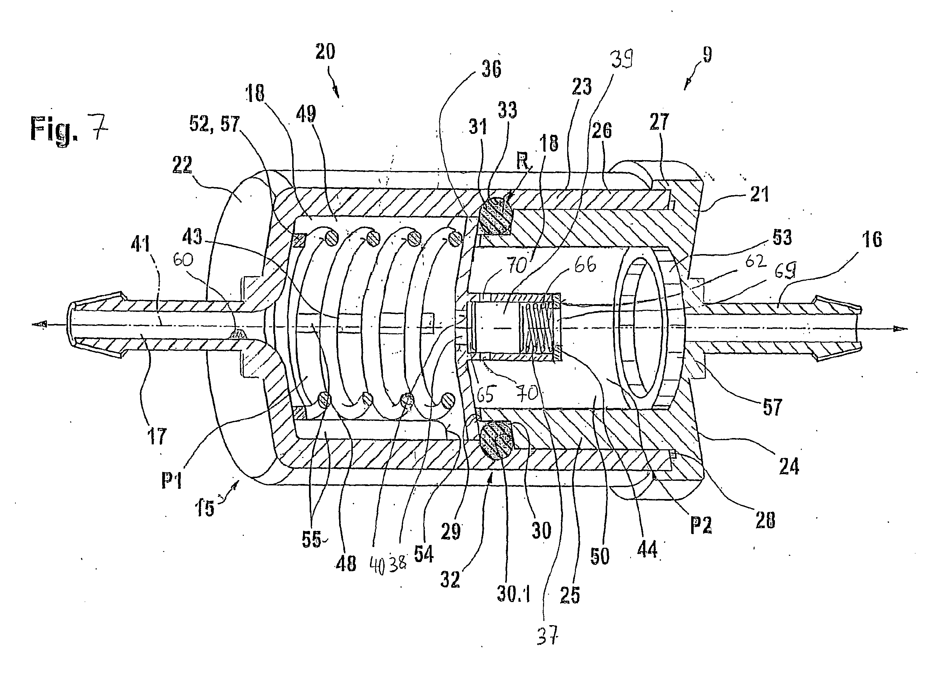

Fig.5 zeigt ein drittes Ausführungsbeispiel, Fig.6 ein viertes Ausführungsbeispiel und Fig.7 ein fünftes Ausführungsbeispiel des erfindungsgemäßen Ventils.

### Beschreibung der Ausführungsbeispiele

Das erfindungsgemäße Ventil wird beispielsweise in einer Kraftstoffeinspritzvorrichtung einer Brennkraftmaschine eingesetzt, um einen Niederdruckspeicher mit Kraftstoff zu befüllen und einen vorbestimmten Druck in dem Niederdruckspeicher aufrechtzuerhalten. Das Ventil kann aber auch in anderen Vorrichtungen zum Steuern von anderen Flüssigkeiten eingesetzt werden.

Fig.1 zeigt eine erste Kraftstoffeinspritzvorrichtung in vereinfachter schematischer Darstellung mit dem erfindungsgemäßen Ventil, das im Folgenden auch als Druckhalteventil bezeichnet wird.

Die erste Kraftstoffeinspritzvorrichtung weist eine Förderpumpe 1 auf, beispielsweise eine Elektrokraftstoffpumpe, die Kraftstoff aus einem Kraftstofftank 2 mit einem aufgebauten Vordruck zu einer Hochdruckpumpe 3 fördert. Die Hochdruckpumpe 3 wird beispielsweise mechanisch durch die Brennkraftmaschine angetrieben. Die Hochdruckpumpe 3 fördert den Kraftstoff mit einem Hochdruck in einen Hochdruckspeicher 4, der auch als Hochdruckrail bezeichnet wird. Mit dem Hochdruckspeicher 4 sind an Zylindern der Brennkraftmaschine angeordnete Injektoren 7, beispielsweise sogenannte Piezo-Injektoren, verbunden. Die Injektoren 7 haben beispielsweise jeweils ein Kraftstoffeinspritzventil und ein Steuerventil. Durch das Öffnen des Steuerventils öffnet das Kraftstoffeinspritzventil, so daß ein Einspritzvorgang erfolgt und Kraftstoff aus dem Hochdruckspeicher 4 über den Injektor 7 in den Zylinder der Brennkraftmaschine eingespritzt wird. Beim Öffnen des Steuerventils wird jeweils eine kleine Rücklaufmenge an erwärmtem Kraftstoff aus dem Injektor 7 über einen Kanal 10 in einen Niederdruckspeicher 8 abgegeben.
Das Steuerventil weist einen piezoelektrischen Aktor auf, der abhängig von einer Spannung, mit der dieser von einer elektronischen Steuereinrichtung angesteuert wird, seine Länge ändert. Die Änderung der Länge des piezoelektrischen Aktors wird über einen mit Kraftstoff gefüllten Koppler vergrößernd übersetzt und auf ein Ventilglied übertragen, so daß das Steuerventil öffnet oder schließt. Der Koppler muß mit Kraftstoff befüllt sein, um die Änderung der Länge des piezoelektrischen Aktors hydraulisch übertragen zu können. Der Koppler wird bei jedem Einspritzvorgang zumindest teilweise entleert und muß anschließend vor dem nächsten Einspritzvorgang wieder über den Kanal 10 mit Kraftstoff aus dem Niederdruckspeicher befüllt werden. Die Koppler benötigen dazu einen notwendigen minimalen Druck. Dieser notwendige minimale Druck muß in dem Niederdruckspeicher 8 mindestens vorherrschen. Sinkt der Druck in dem Niederdruckspeicher 8 unter diesen notwendigen minimalen Druck, kann der Koppler nicht ausreichend befüllt und damit das Steuerventil über das Ventilglied nicht zuverlässig geöffnet werden, so daß kein Einspritzvorgang erfolgt.

Eine Kraftstoffeinspritzvorrichtung mit piezoelektrischem Aktor ist beispielsweise in der nicht vorveröffentlichten deutschen Patentanmeldung DE 102 18 024 oder in der nicht vorveröffentlichten deutschen Patentanmeldung DE 101 39 871 vorgeschlagen, wobei die Inhalte dieser Anmeldungen ausdrücklich Teil der Offenbarung dieser Anmeldung sein sollen.

Das erfindungsgemäße Ventil ist als gemeinsames Druckhalteventil 9 für alle Injektoren 7 an dem Niederdruckspeicher 8 vorgesehen und hält einen durch eine zweite Ventilfeder 44 (Figur 3) vorbestimmten Haltedruck, beispielsweise zehn bar, in dem Niederdruckspeicher 8 konstant, indem es bei einem höheren Druck als dem Haltedruck in Richtung der Förderpumpe 1 öffnet und überschüssigen Kraftstoff aus dem Niederdruckspeicher 8 in eine Leckölleitung 11 ausströmen läßt. Die Leckölleitung 11 ist mit der Druckseite der Förderpumpe 1 bzw. mit einer Saugseite der Hochdruckpumpe 3 verbunden. Auf diese Weise wird der Hochdruckpumpe 3 unter Vordruck stehender, erwärmter Kraftstoff zur Verfügung gestellt, der nicht von der Förderpumpe 1 gefördert werden muß. Die Förderpumpe 1 wird dadurch entlastet und kann daher kleiner ausgelegt werden. Der durch Reibung erwärmte Kraftstoff aus dem Niederdruckspeicher 8 wird mit dem von der Förderpumpe 1 geförderten Kraftstoff aus dem Kraftstofftank 2 vermischt und von der Hochdruckpumpe 3 in den Hochdruckspeicher 4 gefördert. Durch die Zumischung von erwärmtem Kraftstoff kann bei einem kalten Betriebszustand der Brennkraftmaschine die Verbrennung verbessert werden.

Mit jedem Einspritzvorgang strömt Kraftstoff als Rücklaufmenge aus den Injektoren 7 in den Niederdruckspeicher 8. Durch das Druckhalteventil 9 wird die Rücklaufmenge in dem Niederdruckspeicher 8 angestaut. Der Druck in dem Niederdruckspeicher 8 steigt durch die Rücklaufmenge solange an, bis der Haltedruck überschritten ist und das Druckhalteventil 9 öffnet. Dann strömt Kraftstoff aus dem Niederdruckspeicher 8 solange über das Druckhalteventil 9 in die Leckölleitung 11, bis der Druck in dem Niederdruckspeicher 8 den Haltedruck unterschreitet und das Druckhalteventil 9 wieder schließt.
Sinkt der Druck in dem Niederdruckspeicher 8 unter einen von einer ersten Ventilfeder 48 (Figur 3) vorbestimmten Öffnungsdruck, beispielsweise nach einer Reparatur an den Injektoren 7 oder dem Niederdruckspeicher 8 oder nach einem Kraftstoffmangel im Kraftstofftank 2, öffnet das Druckhalteventil 9 bei einem Start der Brennkraftmaschine in Richtung Niederdruckspeicher 8 und es kann Kraftstoff mit einem von der Förderpumpe 1 aufgebauten Vordruck von beispielsweise drei bis fünf bar von der Druckseite der Förderpumpe 1 über die Leckölleitung 11 in den Niederdruckspeicher 8 nachströmen. In dem Niederdruckspeicher 8 herrscht nun der gleiche Druck wie in der Leckölleitung 11. Der Druck in dem Niederdruckspeicher 8 steigt anschließend durch die Rücklaufmenge aus den Injektoren 7 weiter an bis der Haltedruck erreicht ist. Der Niederdruckspeicher 8 wird auf diese Weise befüllt, so daß der Druck in dem Niederdruckspeicher 8 wieder über den notwendigen minimalen Druck steigt und die Funktionsfähigkeit der hydraulischen Koppler wieder sichergestellt ist.

Das Druckhalteventil 9 kann im geöffneten Zustand in zwei Durchflußrichtungen durchströmt werden, also abhängig von dem Druck in dem Niederdruckspeicher 8 entweder in Richtung Niederdruckspeicher 8 oder in Richtung Leckölleitung 11.

Der von der ersten Ventilfeder 48 vorbestimmte Öffnungsdruck muß höher sein als der notwendige minimale Druck, der von den hydraulischen Kopplern benötigt wird.

Ein Druckregelventil 13 hält einen vorbestimmten Druck in dem Hochdruckspeicher 4 konstant. Übersteigt der Druck in dem Hochdruckspeicher 4 den vorbestimmten Druck, öffnet das Druckregelventil 13 und läßt Kraftstoff aus dem Hochdruckspeicher 4 über eine Rücklaufleitung 14 in den Kraftstofftank 2 zurücklaufen.

Fig.2 zeigt eine zweite Kraftstoffeinspritzvorrichtung in vereinfachter schematischer Darstellung mit dem erfindungsgemäßen Ventil.

Bei der Kraftstoffeinspritzvorrichtung nach Fig.2 sind die gegenüber der Kraftstoffeinspritzvorrichtung nach Fig.1 gleichbleibenden oder gleichwirkenden Teile durch die gleichen Bezugszeichen gekennzeichnet. Die Kraftstoffeinspritzvorrichtung nach Fig.2 unterscheidet sich von der Kraftstoffeinspritzvorrichtung nach Fig.1 darin, daß die Förderpumpe 1 entfällt und die Leckölleitung 11 in den Kraftstofftank 2 mündet.

Da die Förderpumpe 1 entfällt und daher kein Vordruck aufgebaut wird, ist die Leckölleitung 11 drucklos. Daher kann der Niederdruckspeicher 8 nicht über die Leckölleitung 11 befüllt werden. Das Druckhalteventil 9 wird daher nur in Richtung Kraftstofftank 2 durchströmt.

Fig.3 zeigt vereinfacht das erfindungsgemäße Ventil.

Das erfindungsgemäße Ventil, in den Fig.1 bis Fig.2 als Druckhalteventil 9 bezeichnet, hat ein Gehäuse 15 mit einem ersten Anschluß 16 und einem zweiten Anschluß 17. Der erste Anschluß 16 wird beispielsweise über die Leckölleitung 11 an die Druckseite der Förderpumpe 1 oder an den Kraftstofftank 2 und der zweite Anschluß 17 an den Niederdruckspeicher 8 angeschlossen. Der erste Anschluß 16 und der zweite Anschluß 17 ist mit einem Innenraum 18 des Gehäuses 15 verbunden.

Das Gehäuse 15 besteht aus einem ersten Gehäuseteil 20 und einem zweiten Gehäuseteil 21. Das erste Gehäuseteil 20 ist beispielsweise topfförmig und das zweite Gehäuseteil 21 beispielsweise deckelförmig ausgebildet.

Das erste Gehäuseteil 20 hat einen Topfboden 22, an dem der zweite Anschluß 17 mit einem beispielsweise runden Strömungsquerschnitt angeordnet ist, und einen Zylinderabschnitt 23 mit einer Zylinderwandung 26. An dem dem Topfboden 22 abgewandten Ende des Zylinderabschnitts 23 des ersten Gehäuseteils 20 ist das zweite Gehäuseteil 21 angeordnet.

Das zweite Gehäuseteil 21 weist einen Deckel 24 und einen zylindrischen Rohrabschnitt 25 auf. In dem Deckel 24 ist auf der dem Topfboden 22 zugewandten Seite eine ringförmige Nut 28 vorgesehen, in die das dem Topfboden 22 abgewandte Ende des Zylinderabschnitts 23 eingesetzt ist. Auf diese Weise übergreift ein Rand 27 des Deckels 24 den Zylinderabschnitt 23 des ersten Gehäuseteils 20. Auf der dem Topfboden 22 abgewandten Seite des Deckels 24 ist der erste Anschluß 16 vorgesehen, der beispielsweise einen runden Strömungsquerschnitt aufweist.

Der Rohrabschnitt 25 ist an dem Deckel 24 auf der dem Topfboden 22 zugewandten Seite beispielsweise zentrisch angeordnet und ragt vollständig in den Zylinderabschnitt 23 hinein. Der Außendurchmesser des Rohrabschnitts 25 ist geringfügig kleiner als der Innendurchmesser des Zylinderabschnitts 23, so daß der Rohrabschnitt 25 des zweiten Gehäuseteils 21 in den Zylinderabschnitt 23 des ersten Gehäuseteils 20 geschoben werden kann. Der Rohrabschnitt 25 liegt dann mit seinem Außenumfang an der Innenseite der Zylinderwandung 26 an.

An einer dem Topfboden 22 zugewandten Ende des Rohrabschnitts 25 ist am Außenumfang eine ringförmige Ausnehmung 30 vorgesehen, die einen stufenförmigen Absatz 30.1 bildet. Der Ausnehmung 30 ist auf der Innenseite der Zylinderwandung 26, in gleicher axialer Position wie die Ausnehmung 30, eine ringförmige Dichtungsnut 33 zugeordnet. Die Dichtungsnut 33 nimmt zusammen mit der Ausnehmung 30 einen Dichtungsring 31, beispielsweise einen O-Ring, auf. Die Dichtungsnut 33 ist eine ringförmige Rille mit einem Radius R des Dichtungsrings 31. Die rillenförmige Dichtungsnut 33 ist in der Zylinderwandung 26 mit einer Tiefe vorgesehen, so daß der Mittelpunkt des Radius R der Dichtungsnut 33 außerhalb der Zylinderwandung 26 liegt. Die Dichtungsnut 33 kann daher den Dichtungsring 31 nur teilweise aufnehmen. Der Dichtungsring 31 ist durch die Dichtungsnut 33 axial fixiert.

Das dem Topfboden 22 zugewandte Ende mit einer Stirnseite 29 des Rohrabschnitts 25 bildet zusammen mit dem Dichtungsring 31 einen ersten Ventilsitz 32.

In dem Innenraum 18 des Gehäuses 15 ist ein erster Schließkörper 35 beweglich vorgesehen, der mit dem ersten Ventilsitz 32 zusammenwirkt. Der erste Schließkörper 35 ist beispielsweise nahe der axialen Mitte des Ventils angeordnet. Er kann sich zwischen dem ersten Ventilsitz 32 und einem Anschlag 54 axial bewegen und ist radial durch die Innenseite der Zylinderwandung 26 geführt. Der Anschlag 54 wird gebildet durch beispielsweise sechs über den Umfang der Zylinderwandung 26 verteilte Rippen 55. Die Rippen 55 sind von dem Topfboden 22 ausgehend in axiale Richtung verlaufend an der Innenseite der Seitenwandung 26 angeordnet.

Der erste Schließkörper 35 besteht aus einem Schließdeckel 36 und einem Rohrstutzen 37, der auf der dem Topfboden 22 zugewandten Seite des Schließdeckels 36 beispielsweise zentrisch angeordnet ist.

Der Schließdeckel 36 ist eine runde Platte, deren Durchmesser geringfügig kleiner ist als der Innendurchmesser des Zylinderabschnitts 23. Der Schließdeckel 36 liegt bei geschlossenem Ventil mit seiner dem Topfboden 22 abgewandten Seite an dem Dichtungsring 31 an, der in axialer Richtung etwas über die Stirnseite 29 des Rohrabschnitts 25 heraussteht.

Der Rohrstutzen 37 ist zusammen mit dem ersten Anschluß 16 und dem zweiten Anschluß 17 auf einer Achse 41 angeordnet. Der Rohrstutzen 37 ist gemäß dem ersten Ausführungsbeispiel an einem dem Topfboden 22 zugewandten Endabschnitt 42 nahezu geschlossen. Der Endabschnitt 42 des Rohrstutzens 37 verjüngt sich gemäß dem ersten Ausführungsbeispiel in Richtung Topfboden 22 mit einem Konus, der beispielsweise einen Winkel von 110 Grad aufweist. In dem sich verjüngenden Endabschnitt 42 ist eine Durchgangsöffnung 38 beispielsweise zentrisch auf der Achse 41 vorgesehen.
In dem Rohrstutzen 37 ist ein mit der Durchgangsöffnung 38 zusammenwirkender zweiter Schließkörper 39 vorgesehen. Der zweite Schließkörper 39 ist beispielsweise eine Kugel 43, die die Durchgangsöffnung 38 dicht verschließen kann. Die Innenseite des Endabschnitts 42 bildet einen zweiten Ventilsitz 40.

Der erste Schließkörper 35 teilt den Innenraum 18 in einen zylindrischen Hochdruckraum 49, der beispielsweise ein Volumen von fünf Kubikzentimetern hat, und in einen zylindrischen Niederdruckraum 50. Der Hochdruckraum 49 wird eingeschlossen von dem Topfboden 22, einem Teil des Zylinderabschnitts 23 und dem ersten Schließkörper 35. Der Niederdruckraum 50 wird eingeschlossen von dem Deckel 24, dem Rohrabschnitt 25 und dem ersten Schließkörper 35. Der Hochdruckraum 49 und der Niederdruckraum 50 sind beispielsweise annähernd gleich groß. Der erste Anschluß 16 mündet in den Niederdruckraum 50, der zweite Anschluß 17 in den Hochdruckraum 49.

Ein erster Filter 52 ist im Hochdruckraum 49 an dem Topfboden 22 , ein zweiter Filter 53 im Niederdruckraum 50 an dem Deckel 24 zur Kraftstofffilterung vorgesehen.

Der erste Filter 52 und der zweite Filter 53 bestehen gemäß dem ersten Ausführungsbeispiel jeweils aus einem aus Kunststoff hergestellten Filterring 57, in dem axial mittig ein Filtergewebe, beispielsweise aus Edelstahl, eingespannt ist. Das Filtergewebe hat beispielsweise eine Maschenweite von sechshundertstel Millimetern.

Der zweite Schließkörper 39 wird in dem Rohrstutzen 37 führend gelagert und von einer zweiten Ventilfeder 44 in Richtung Durchgangsöffnung 38 gedrückt.
Die zweite Ventilfeder 44 ist gemäß dem ersten Ausführungsbeispiel auf der dem Deckel 24 zugewandten Seite an dem zweiten Filter 53 angeordnet und drückt den zweiten Filter 53 an den Deckel 24. Die zweite Ventilfeder 44 verläuft zunächst an einer Innenwand des Rohrabschnitts 25 anliegend in Richtung des zweiten Schließkörpers 39, wobei sich die zweite Ventilfeder 44 an einem dem Topfboden 22 zugewandten Endabschnitt des Rohrabschnitts 25 verjüngt und sich an eine Innenwand 45 des Rohrstutzens 37 anschmiegt. Auf der dem Topfboden 22 zugewandten Seite liegt die zweite Ventilfeder 44 an dem zweiten Schließkörper 39 an.

Eine erste Ventilfeder 48 ist gemäß dem ersten Ausführungsbeispiel an dem ersten Filter 52 angeordnet, drückt den Schließdeckel 36 gegen den Ventilsitz 32 und den ersten Filter 52 gegen den Topfboden 22.

Der Dichtungsring 31 dichtet zusammen mit dem Schließdeckel 36 den Hochdruckraum 49 gegenüber dem Niederdruckraum 50 ab, so daß im geschlossenen Zustand des Ventils kein Kraftstoff zwischen dem Hochdruckraum 49 und dem Niederdruckraum 50 ausgetauscht werden kann. Der Dichtungsring 31 dichtet das Ventil außerdem nach außen hin ab, so daß kein Kraftstoff zwischen Zylinderwandung 26 und Rohrabschnitt 25 nach außen entweichen kann.

Das Gehäuse 15 ist beispielsweise aus Kunststoff, der erste Schließkörper 35 aus Metall, beispielsweise Edelstahl, hergestellt.

Der Kraftstoff in dem Niederdruckraum 50 wirkt mit einem Druck P2, der etwa gleich dem von der Förderpumpe 1 aufgebauten Druck in der Leckölleitung 11 ist und beispielsweise drei bis fünf bar beträgt, auf den zweiten Schließkörper 39, drückt diesen abdichtend gegen die Durchgangsöffnung 38. Zusätzlich wirkt der Druck P2 auf die nahezu gesamte dem Topfboden 22 abgewandte Stirnfläche des Schließdeckels 36 und versucht diesen in Richtung Topfboden 22 zu drücken. Ein Druck P1 in dem Hochdruckraum 49 und die erste Ventilfeder 48 wirken jedoch auf den Schließdeckel 36 in entgegengesetzte Richtung zum ersten Ventilsitz 32. Übersteigt der Druck P2 den vorbestimmten Öffnungsdruck, hebt der erste Schließkörper 35 von dem Dichtungsring 31 in Richtung Topfboden 22 ab und öffnet das Ventil für das Befüllen des Niederdruckspeichers 8. Aufgrund der Druckdifferenz zwischen dem Druck P1 und dem Druck P2 strömt Kraftstoff aus dem Niederdruckraum 50 um den Schließdeckel 36 herum in den Hochdruckraum 49, anschließend durch den ersten Filter 52 in den zweiten Anschluß 17 und von dort in den Niederdruckspeicher 8. Dadurch steigen der Druck in dem Niederdruckspeicher 8 und auch der Druck P1 in dem mit dem Niederdruckspeicher 8 verbundenen Hochdruckraum 49 an, so daß das Ventil schließlich wieder schließt.

Abhängig von einem Kräftegleichgewicht bestehend aus der Federkraft der ersten Ventilfeder 48, der durch den Druck P1 auf die dem Topfboden 22 abgewandte Stirnfläche des Schließdeckels 36 wirkende Kraft und der durch den Druck P2 auf die dem Topfboden 22 zugewandte Stirnfläche des Schließdeckels 36 wirkende Kraft öffnet oder schließt der erste Schließkörper 35 und damit das Ventil.

Der Kraftstoff in dem Hochdruckraum 49 wirkt mit einem Druck P1, beispielsweise zehn bar, auf die gesamte dem Topfboden 22 zugewandte Stirnfläche des Schließdeckels 36, drückt diesen abdichtend gegen den ersten Ventilsitz 32. Außerdem wirkt der Druck P1 über die Durchgangsöffnung 38 auf den zweiten Schließkörper 39 und versucht diesen in Richtung Deckel 24 zu drücken. Der Druck P2 und die zweite Ventilfeder 44 wirken jedoch auf den zweiten Schließkörper 39 in entgegengesetzte Richtung. Übersteigt der Druck P1 den vorbestimmten Haltedruck, hebt der zweite Schließkörper 39 von dem zweiten Ventilsitz 40 in Richtung Deckel 24 ab und öffnet das Ventil. Aufgrund der Druckdifferenz zwischen dem Druck P1 und dem Druck P2 strömt jetzt Kraftstoff durch die Durchgangsöffnung 38 um den zweiten Schließkörper 39 herum in den Niederdruckraum 50, anschließend durch den zweiten Filter 53 in den ersten Anschluß 16 und von dort in die Leckölleitung 11. Dadurch sinkt der Druck in dem Niederdruckspeicher 8 und auch der Druck P1 in dem mit dem Niederdruckspeicher 8 verbundenen Hochdruckraum 49. Der Druck P1 ist im Vergleich zu dem Druck P2 schließlich nicht mehr ausreichend groß, um den zweiten Schließkörper 39 geöffnet zu halten, und der zweite Schließkörper 39 legt sich wieder an den zweiten Ventilsitz 40 an, so daß das Ventil geschlossen ist.

Abhängig von einem Kräftegleichgewicht bestehend aus der Federkraft der zweiten Ventilfeder 44, der durch den Druck P2 auf die Fläche des zweiten Schließkörpers 39 wirkende Kraft und der durch den Druck P1 auf die Fläche des zweiten Schließkörpers 39 wirkende Kraft öffnet oder schließt der zweite Schließkörper 39 und damit das Ventil.

Die Federkraft der ersten Ventilfeder 48 und die Federkraft der zweiten Ventilfeder 44 ist so ausgelegt, daß an dem Ventil zu einem Zeitpunkt nur entweder der erste Schließkörper 35 oder der zweite Schließkörper 39 geöffnet sein kann.

Da der Druck P1 auf der Seite des Niederdruckspeichers 8 mit beispielsweise zehn bar vergleichsweise hoch ist und gegen den zweiten Schließkörper 39 drückt, muß die Federkraft der zweiten Ventilfeder 44 vergleichsweise stark ausgelegt sein, damit der zweite Schließkörper 39 nicht vorzeitig öffnet, sondern erst bei Überschreiten des durch die zweite Ventilfeder 44 vorbestimmten Haltedrucks.
Die Federkraft der ersten Ventilfeder 48 ist dagegen schwächer ausgelegt als die Federkraft der zweiten Ventilfeder 44, da der Druck P2 mit beispielsweise drei bis fünf bar im Vergleich zu dem Druck P1 mit beispielsweise zehn bar geringer ist.

Durch das Volumen des in dem Hochdruckraum 49 enthaltenen Kraftstoffs werden Druckschwankungen, die auch auf"die hydraulischen Koppler zurückwirken und deren Funktion negativ beeinflussen, in dem Niederdruckspeicher 8 verringert bzw. gedämpft.

Der erste Filter 52 und der zweite Filter 53 filtern in dem Kraftstoff vorhandene feste Partikel heraus und verhindern, daß diese über den ersten Anschluß 16 oder den zweiten Anschluß 17 in das Ventil gelangen können. Außerdem wird verhindert, daß beispielsweise ungefilterter Kraftstoff aus der Leckölleitung 11 in den Niederdruckspeicher 8 und damit in die Injektoren 7 gelangen kann.

Fig.4 zeigt vereinfacht ein zweites Ausführungsbeispiel des erfindungsgemäßen Ventils.

Bei dem Ventil nach Fig.4 sind die gegenüber dem Ventil nach Fig.3 gleichbleibenden oder gleichwirkenden Teile durch die gleichen Bezugszeichen gekennzeichnet.

Das Ventil nach Fig.4 unterscheidet sich von dem Ventil nach Fig.3 darin, daß das Gehäuse 15 außer dem mit dem Hochdruckraum 49 verbundenen zweiten Anschluß 17 einen ebenfalls mit dem Hochdruckraum 49 verbundenen dritten Anschluß 51 aufweist, an dem ein weiterer Niederdruckspeicher 8' angeschlossen ist. Es ist auch möglich, daß das Ventil mehr als zwei Anschlüsse 17, 51 an dem Topfboden 22 aufweist.

Fig.5 zeigt vereinfacht ein drittes Ausführungsbeispiel des erfindungsgemäßen Ventils.

Bei dem Ventil nach Fig.5 sind die gegenüber dem Ventil nach Fig.3 und Fig.4 gleichbleibenden oder gleichwirkenden Teile durch die gleichen Bezugszeichen gekennzeichnet. Das Ventil nach Fig.5 unterscheidet sich von dem Ventil nach Fig.3 darin, daß der erste Filter 52 und der zweite Filter 53 nicht als flacher Filter, sondern als topfförmiger Filter ausgebildet sind. Auf diese Weise wird eine größere Filterfläche erzielt, so daß der erste Filter 52 und der zweite Filter 53 weniger leicht verstopfen können.

Der erste Filter 52 und der zweite Filter 53 weisen beispielsweise ein bekanntes Filtervlies auf.

Der topfförmige erste Filter 52 umgreift den Rohrstutzen 37 des ersten Schließkörpers 35 und ist im Hochdruckraum 49 mit einer ersten Schulter 58 an dem Schließdeckel 36 angeordnet. Die erste Ventilfeder 48 liegt mit einem Ende an dem Topfboden 22 und mit dem anderen Ende an der ersten Schulter 58 des ersten Filters 52 an und drückt den ersten Schließkörper 35 in Richtung des ersten Ventilsitzes 32. Der erste Filter 52 ist auf diese Weise durch Einklemmen zwischen der ersten Ventilfeder 48 und dem Schließdeckel 36 befestigt. Der erste Filter 52 kann aber beispielsweise auch durch Kleben, Schweißen, Spritzen oder ähnliches mit dem Schließdeckel 36 verbunden sein.

Der topfförmige zweite Filter 53 ist in dem Niederdruckraum 50 mit einer zweiten Schulter 59 an dem Deckel 24 angeordnet. Die zweite Ventilfeder 44 liegt mit einem Ende an dem zweiten Schließkörper 39 und mit dem anderen Ende an der zweiten Schulter 59 des zweiten Filters 53 an und drückt den zweiten Schließkörper 39 in Richtung des zweiten Ventilsitzes 40. Der zweite Filter 53 ist auf diese Weise durch Einklemmen zwischen der zweiten Ventilfeder 44 und dem Deckel 24 befestigt. Der zweite Filter 53 kann aber beispielsweise auch durch Kleben, Schweißen, Spritzen oder ähnliches mit dem Deckel 24 verbunden sein.

Der zweite Anschluß 17 weist beispielsweise zumindest ein Strömungselement 60 auf, das die aus dem Niederdruckspeicher 8 in den Hochdruckraum 49 gerichtete Strömung verwirbelt. Das Strömungselement 60 verbessert auf diese Weise die Filterwirkung des zweiten Filters 53, da sich faserförmige Partikel nicht mehr derart in der Strömung ausrichten können, daß sie nicht vom zweiten Filter 53 zurückgehalten werden. Das Strömungselement 60 ist beispielsweise eine in die Strömung ragende Erhebung oder ähnliches.

Fig.6 zeigt vereinfacht ein viertes Ausführungsbeispiel des erfindungsgemäßen Ventils.

Bei dem Ventil nach Fig.6 sind die gegenüber dem Ventil nach Fig.3 bis Fig.5 gleichbleibenden oder gleichwirkenden Teile durch die gleichen Bezugszeichen gekennzeichnet. Das Ventil nach Fig.6 unterscheidet sich von dem Ventil nach Fig.3 darin, daß der zweite Schließkörper 39 nicht als Kugel sondern als Zylinder ausgebildet ist. Der Endabschnitt 42 des Rohrstutzens 37 verjüngt sich deshalb bei diesem Ausführungsbeispiel nicht,sondern ist eben ausgeführt. Der zweite Ventilsitz 40 mit der Durchgangsöffnung 38 ist im ebenen Endabschnitt 42 an einer dem Hochdruckraum 49 zugewandten zweiten Stirnseite 62 des Rohrstutzens 37 angeordnet, beispielsweise auf der Achse 41.

Der Zylinder ist wie die Kugel in axiale Richtung beweglich angeordnet und ist radial von dem Rohrstutzen 37 geführt. Der zweite Schließkörper 39 weist auf der dem zweiten Ventilsitz 40 zugewandten Seite einen elastischen Dichtkörper 63, beispielsweise aus Gummi, auf. Durch diesen elastischen Dichtkörper 63, beispielsweise als Schicht ausgebildet, ist der zweite Ventilsitz 40 weniger schmutzempfindlich, da beispielsweise an dem zweiten Ventilsitz 40 und/oder dem elastischen Dichtkörper 63 angelagerte Schmutzpartikel von der zweiten Ventilfeder 44 in den elastischen Dichtkörper 63 des zweiten Schließkörpers 39 eingedrückt werden und ein dichtes Anliegen des Dichtkörpers 63 am zweiten Ventilsitz 40 nicht verhindern.

Bei geöffnetem zweiten Schließkörper 39 umströmt der Kraftstoff den zweiten Schließkörper 39 über beispielsweise zumindest eine am Umfang des Rohrstutzens 37 angeordnete, in Richtung der Achse 41 verlaufende Nut 64.

Fig.7 zeigt vereinfacht ein fünftes Ausführungsbeispiel des erfindungsgemäßen Ventils.

Bei dem Ventil nach Fig.7 sind die gegenüber dem Ventil nach Fig.3 bis Fig.6 gleichbleibenden oder gleichwirkenden Teile durch die gleichen Bezugszeichen gekennzeichnet.

Das Ventil nach Fig.7 unterscheidet sich von dem Ventil nach Fig.3 bis Fig.6 darin, daß der erste Schließkörper 35 einen Rohrstutzen 37 aufweist, der auf der dem Niederdruckraum 50 zugewandten Stirnseite des ersten Schließkörpers 35 angeordnet ist.

Der zweite Schließkörper 39 ist wie in dem vierten Ausführungsbeispiel nach Fig.6 als Zylinder ausgebildet und in dem Rohrstutzen 37 axial beweglich angeordnet.

Der zweite Schließkörper 39 teilt den Rohrstutzen 37 in einen Ventilraum 65 und einen Federraum 68. Der Ventilraum 65 ist über die Durchgangsöffnung 38 mit dem Hochdruckraum 49 verbunden, wenn der zweite Schließkörper 39 von dem zweiten Ventilsitz 40 abgehoben ist. In dem Federraum 68 ist die zweite Ventilfeder 44 angeordnet und drückt den zweiten Schließkörper 39 mit einer Vorspannung in Richtung des zweiten Ventilsitzes 40. Der Federraum 66 ist über eine Belüftungsöffnung 69 mit dem Niederdruckraum 50 verbunden.

Am Umfang des Rohrstutzens 37 ist zumindest eine, beispielsweise sind drei Steueröffnungen 70 vorgesehen, die den Hochdruckraum 49 über den Ventilraum 65 und die Durchgangsöffnung 38 mit dem Niederdruckraum 50 verbinden, wenn der zweite Schließkörper 39 von dem zweiten Ventilsitz 40 abgehoben ist und die Steueröffnungen 70 geöffnet sind. Die Steueröffnungen 70 sind geöffnet, sobald der zweite Schließkörper 39 die Steueröffnungen 70 mit seinem Umfang nicht vollständig überdeckt.

Das Ventil gemäß dem fünften Ausführungsbeispiel ist ebenfalls unempfindlich gegen Schmutzpartikel, da die Dichtfunktion von dem zweiten Ventilsitz 40 weg an die Steueröffnungen 70 gelegt ist und sich Schmutzpartikel weniger leicht zwischen dem zweitem Schließkörper 39 und dem Rohrstutzen 37 anlagern als zwischen dem zweitem Schließkörper 39 und dem zweiten Ventilsitz 40.

Der erste Anschluß 16 und der zweite Anschluß 17 haben am äußeren Umfang jeweils beispielsweise zwei Crimprippen 72, die jeweils als Anschlag für beispielsweise einen auf den ersten Anschluß 16 und den zweiten Anschluß 17 aufzuschiebenden Schlauch dienen. Die Crimprippen 72 des ersten Anschlusses 16 sind an einem dem Deckel 24 zugewandten Ende des ersten Anschlusses 16 und die Crimprippen 72 des zweiten Anschlusses 17 an einem dem Topfboden 22 zugewandten Ende des zweiten Anschlusses 17 angeordnet. Die Crimprippen 72 liegen sich beispielsweise jeweils diametral gegenüber. Der an dem ersten Anschluß 16 und dem zweiten Anschluß 17 vorgesehene Schlauch wird beispielsweise mittels einer sogenannten Crimpverbindung befestigt, die durch die Crimprippen 72 besser und zuverlässiger herzustellen ist.

## Patentansprüche

1. Ventil für eine Kraftstoffeinspritzvorrichtung zum Steuern von Flüssigkeit bestehend aus einem Gehäuse, an dem ein erster Anschluss und ein zweiter Anschluss vorgesehen und in dem ein Innenraum ausgebildet ist, der einen Ventilsitz und einen mit dem Ventilsitz zusammenwirkenden Schließkörper aufweist, wobei das Ventil einen ersten Ventilsitz (32) mit einem ersten Schließkörper (35) und einen zweiten Ventilsitz (40) mit einem zweiten Schließkörper (39) aufweist, wobei der zweite Ventilsitz (40) an dem ersten Schließkörper (35) angeordnet ist, wobei das Gehäuse aus einem ersten Gehäuseteil (20) und einem zweiten Gehäuseteil (21) besteht, wobei das erste Gehäuseteil (20) einen Zylinderabschnitt (23) mit einer Zylinderwandung (26) aufweist, wobei das zweite Gehäuseteil (21) einen Deckel (24) und einen von dem Deckel (24) abstehenden zylindrischen Rohrabschnitt (25) aufweist, wobei der zylindrische Rohrabschnitt (25) des zweiten Gehäuseteils (21) in den Zylinderabschnitt (23) des ersten Gehäuseteils (20) hineinragt und der Außendurchmesser des Rohrabschnitts (25) des zweiten Gehäuseteils (21) geringfügig kleiner als der Innendurchmesser des Zylinderabschnitts (23) des ersten Gehäuseteils (20) ist, wobei am Außenumfang des Rohrabschnitts (25) des zweiten Gehäuseteils (21) eine ringförmige Ausnehmung (30) für einen Dichtungsring vorgesehen ist, **dadurch gekennzeichnet, dass** die Ausnehmung (30) an einer dem ersten Schließkörper (35) zugewandten Stirnseite (29) des Rohrabschnitts (25) angeordnet ist und einen stufenförmigen Absatz (30.1) bildet, wobei die Stirnseite (29) des Rohrabschnitts (25) zusammen mit dem Dichtungsring (31) den ersten Ventilsitz (32) bildet.

2. Ventil für eine Kraftstoffeinspritzvorrichtung nach Anspruch 1, **dadurch gekennzeichnet, dass** der erste Schließkörper (35) den Innenraum (18) des Gehäuses (15) in einen Hochdruckraum (49) und einen Niederdruckraum (50) teilt.

3. Ventil für eine Kraftstoffeinspritzvorrichtung nach Anspruch 1, **dadurch gekennzeichnet, dass** der erste Schließkörper (35) und der zweite Schließkörper (39) auf einer Achse (41) liegen.

4. Ventil für eine Kraftstoffeinspritzvorrichtung nach Anspruch 1, **dadurch gekennzeichnet, dass** der erste Schließkörper (35) und der zweite Schließkörper (39) in entgegengesetzten Öffnungsrichtungen öffnen.

5. Ventil für eine Kraftstoffeinspritzvorrichtung nach Anspruch 1, **dadurch gekennzeichnet, dass** der erste Schließkörper (35) einen Schließdeckel (36) mit einem von dem Schließdeckel (36) abstehenden zylindrischen Rohrabschnitt (37) aufweist.

6. Ventil für eine Kraftstoffeinspritzvorrichtung nach Anspruch 5, **dadurch gekennzeichnet, dass** der zweite Schließkörper (39) eine Kugel (43) ist, wobei die Kugel (43) in dem zylindrischen Rohrabschnitt (37) geführt angeordnet ist.

7. Ventil für eine Kraftstoffeinspritzvorrichtung nach Anspruch 5, **dadurch gekennzeichnet, dass** der zweite Schließkörper (39) zylinderförmig ist, wobei der zylinderförmige zweite Schließkörper (39) in dem zylindrischen Rohrabschnitt (37) geführt angeordnet ist.

8. Ventil für eine Kraftstoffeinspritzvorrichtung nach Anspruch 7, **dadurch gekennzeichnet, dass** der zweite Schließkörper (39) einen dem zweiten Ventilsitz (40) zugewandten elastischen Dichtkörper (63) aufweist.

9. Ventil für eine Kraftstoffeinspritzvorrichtung nach Anspruch 7, **dadurch gekennzeichnet, dass** der zylindrische Rohrabschnitt (37) am Umfang zumindest eine dem Niederdruckraum (50) zugewandte Steueröffnung (70) aufweist, die den Hochdruckraum (49) bei geöffnetem zweiten Schließkörper (39) zumindest mittelbar mit dem Niederdruckraum (50) verbindet.

10. Ventil für eine Kraftstoffeinspritzvorrichtung nach Anspruch 1, **dadurch gekennzeichnet, dass** das Ventil ein Gehäuse (15) aufweist, das aus zumindest zwei Teilen besteht, wobei ein erstes Gehäuseteil (20) deckelförmig und ein zweites Gehäuseteil (21) topfförmig ist.

11. Ventil für eine Kraftstoffeinspritzvorrichtung nach Anspruch 2, **dadurch gekennzeichnet, dass** das Ventil in dem Niederdruckraum (50) an den ersten Anschluß (16) anschließend einen ersten Filter (52) und in dem Hochdruckraum (49) an den zweiten Anschluß (17) anschließend einen zweiten Filter (53) aufweist.

12. Ventil für eine Kraftstoffeinspritzvorrichtung nach Anspruch 11, **dadurch gekennzeichnet, dass** der erste Filter (52) und/oder der zweite Filter (53) topfförmig oder scheibenförmig ausgebildet ist.

13. Ventil für eine Kraftstoffeinspritzvorrichtung nach Anspruch 1, **dadurch gekennzeichnet, dass** der zweite Anschluß (17) ein Strömungselement (60) aufweist.

## Claims

1. Valve for a fuel injection device for controlling fluids, comprising a housing on which a first port and a second port are provided and in which is formed an interior space which has a valve seat and a closing body which interacts with the valve seat, the valve having a first valve seat (32) with a first closing body (35) and a second valve seat (40) with a second closing body (39), the second valve seat (40) being arranged on the first closing body (35), the housing being composed of a first housing part (20) and a second housing part (21), the first housing part (20) having a cylinder section (23) with a cylinder wall (26), the second housing part (21) having a cover (24) and a cylindrical pipe section (25) which protrudes from the cover (24), the cylindrical pipe section (25) of the second housing part (21) projecting into the cylinder section (23) of the first housing part (20) and the outer diameter of the pipe section (25) of the second housing part (21) being slightly smaller than the inner diameter of the cylinder section (23) of the first housing part (20), an annular recess (30) for a seal ring being provided on the outer circumference of the pipe section (25) of the second housing part (21), **characterized in that** the recess (30) is arranged on an end side (29), which faces towards the first closing body (35), of the pipe section (25) and forms a stepped shoulder (30.1), the end side (29) of the pipe section (25) together with the seal ring (31) forming the first valve seat (32).

2. Valve for a fuel injection device according to Claim 1, **characterized in that** the first closing body (35) divides the interior space (18) of the housing (15) into a high-pressure chamber (49) and a low-pressure chamber (50).

3. Valve for a fuel injection device according to Claim 1, **characterized in that** the first closing body (35) and the second closing body (39) lie on an axis (41).

4. Valve for a fuel injection device according to Claim 1, **characterized in that** the first closing body (35) and the second closing body (39) open in opposite opening directions.

5. Valve for a fuel injection device according to Claim 1, **characterized in that** the first closing body (35) has a closing cover (36) with a cylindrical pipe section (37) projecting from the closing cover (36).

6. Valve for a fuel injection device according to Claim 5, **characterized in that** the second closing body (39) is a ball (43), the ball (43) being arranged so as to be guided in the cylindrical pipe section (37).

7. Valve for a fuel injection device according to Claim 5, **characterized in that** the second closing body (39) is cylindrical, the cylindrical second closing body (39) being arranged so as to be guided in the cylindrical pipe section (37).

8. Valve for a fuel injection device according to Claim 7, **characterized in that** the second closing body (39) has an elastic sealing body (63) which faces towards the second valve seat (40).

9. Valve for a fuel injection device according to Claim 7, **characterized in that** the cylindrical pipe section (37) has, on the circumference, at least one control opening (70) which faces towards the low-pressure chamber (50) and which, when the second closing body (39) is open, connects the high-pressure chamber (49) at least indirectly to the low-pressure chamber (50).

10. Valve for a fuel injection device according to Claim 1, **characterized in that** the valve has a housing (15) which is composed of at least two parts, a first housing part (20) being in the form of a cover and a second housing part (21) being in the form of a pot.

11. Valve for a fuel injection device according to Claim 2, **characterized in that** the valve has, in the low-pressure chamber (50), a first filter (52) which adjoins the first port (16) and, in the high-pressure chamber (49), a second filter (53) which adjoins the second port (17).

12. Valve for a fuel injection device according to Claim 11, **characterized in that** the first filter (52) and/or the second filter (53) is formed in the shape of a pot or disc.

13. Valve for a fuel injection device according to Claim 1, **characterized in that** the second port (17) has a flow element (60).

## Revendications

1. Soupape pour un dispositif d'injection de carburant, pour la commande de liquide, constituée d'un boîtier, sur lequel sont prévus un premier raccord et un deuxième raccord et dans lequel est réalisé un espace interne, qui présente un siège de soupape et un corps de fermeture coopérant avec le siège de soupape, la soupape présentant un premier siège de soupape (32) avec un premier corps de fermeture (35) et un deuxième siège de soupape (40) avec un deuxième corps de fermeture (39), le deuxième siège de soupape (40) étant disposé sur le premier corps de fermeture (35), le boîtier se composant d'une première partie de boîtier (20) et d'une deuxième partie de boîtier (21), la première partie de boîtier (20) présentant une portion de cylindre (23) avec une paroi cylindrique (26), la deuxième partie de boîtier (21) présentant un couvercle (24) et une portion tubulaire cylindrique (25) partant du couvercle (24), la portion tubulaire cylindrique (25) de la deuxième partie de boîtier (21) pénétrant dans la portion de cylindre (23) de la première partie de boîtier (20) et le diamètre extérieur de la portion tubulaire (25) de la deuxième partie de boîtier (21) étant légèrement inférieur au diamètre intérieur de la portion de cylindre (23) de la première partie de boîtier (20), un évidement annulaire (30) pour une bague d'étanchéité étant prévu sur la circonférence extérieure de la portion tubulaire (25) de la deuxième partie de boîtier (21), **caractérisée en ce que** l'évidement (30) est disposé sur un côté frontal (29) de la portion tubulaire (25) tourné vers le premier corps de fermeture (35) et forme un épaulement de forme étagée (30.1), le côté frontal (29) de la portion tubulaire (25) formant le premier siège de soupape (32), conjointement avec la bague d'étanchéité (31).

2. Soupape pour un dispositif d'injection de carburant selon la revendication 1, **caractérisée en ce que** le premier corps de fermeture (35) divise l'espace interne (18) du boîtier (15) en un espace haute pression (49) et un espace basse pression (50).

3. Soupape pour un dispositif d'injection de carburant selon la revendication 1, **caractérisée en ce que** le premier corps de fermeture (35) et le deuxième corps de fermeture (39) se situent sur un axe (41).

4. Soupape pour un dispositif d'injection de carburant selon la revendication 1, **caractérisée en ce que** le premier corps de fermeture (35) et le deuxième corps de fermeture (39) s'ouvrent dans des directions d'ouverture opposées.

5. Soupape pour un dispositif d'injection de carburant selon la revendication 1, **caractérisée en ce que** le premier corps de fermeture (35) présente un couvercle de fermeture (36) avec une portion tubulaire cylindrique (37) saillant depuis le couvercle de fermeture (36).

6. Soupape pour un dispositif d'injection de carburant selon la revendication 5, **caractérisée en ce que** le deuxième corps de fermeture (39) est une bille (43), la bille (43) étant disposée de manière guidée dans la portion tubulaire cylindrique (37).

7. Soupape pour un dispositif d'injection de carburant selon la revendication 5, **caractérisée en ce que** le deuxième corps de fermeture (39) est cylindrique, le deuxième corps de fermeture cylindrique (39) étant disposé de manière guidée dans la portion tubulaire cylindrique (37).

8. Soupape pour un dispositif d'injection de carburant selon la revendication 7, **caractérisée en ce que** le deuxième corps de fermeture (39) présente un corps d'étanchéité élastique (63) tourné vers le deuxième siège de soupape (40).

9. Soupape pour un dispositif d'injection de carburant selon la revendication 7, **caractérisée en ce que** la portion tubulaire cylindrique (37) présente, sur sa périphérie, au moins une ouverture de commande (70) tournée vers l'espace basse pression (50), laquelle relie l'espace haute pression (49), lorsque le deuxième corps de fermeture (39) est ouvert, au moins de manière indirecte à l'espace basse pression (50).

10. Soupape pour un dispositif d'injection de carburant selon la revendication 1, **caractérisée en ce que** la soupape présente un boîtier (15), qui se compose d'au moins deux parties, une première partie de boîtier (20) étant en forme de couvercle et une deuxième partie de boîtier (21) étant en forme de pot.

11. Soupape pour un dispositif d'injection de carburant selon la revendication 2, **caractérisée en ce que** la soupape présente, dans l'espace basse pression (50), un premier filtre (52) se raccordant au premier raccord (16), et dans l'espace haute pression (49), un deuxième filtre (53) se raccordant au deuxième raccord (17).

12. Soupape pour un dispositif d'injection de carburant selon la revendication 11, **caractérisée en ce que** le premier filtre (52) et/ou le deuxième filtre (53) sont réalisés en forme de pot ou en forme de disque.

13. Soupape pour un dispositif d'injection de carburant selon la revendication 1, **caractérisée en ce que** le deuxième raccord (17) présente un élément d'écoulement (60).
